# DEMANDE DE BREVET EUROPEEN

(11) **EP 1 721 736 A1**
(43) Date de publication de la demande: **15.11.2006**
(21) Numéro de dépôt: 06290798.5
(22) Date de dépôt: 15.05.2006
(51) Int. Cl.: B32B 27/12, B32B 27/10, B32B 37/15

(54) **Revêtement de surface et son procédé de fabrication**

(30) Priorité: 13.05.2005 FR 0504846
(71) Demandeur: Ugepa, 80110 Moreuil (FR)
(72) Inventeur: Vogel, Bernard, 80110 Aubvilliers (FR); Guillerot, Marc, 92210 Saint-Cloud (FR)
(74) Mandataire: Hennion, Jean-Claude

(57) **Abrégé**

Le revêtement de l'invention trouve notamment son application au domaine des papiers peints et revêtements muraux de décoration d'intérieur.

Il comprend une couche dorsale (3) en non tissé avec une face (3a) constituant la face dorsale du revêtement destinée à recouvrir la surface à revêtir, une couche frontale (4) en papier avec une première face (4a) et une face opposée (4b) constituant la face frontale décorative, et un film plastique (5) dont les première et deuxièmes faces adhèrent directement et respectivement à la deuxième face de la couche dorsale (3b) et à la première face de la couche frontale (4a), la face de la couche frontale opposée à sa première face étant recouverte d'une couche imperméable aux liquides.

Le procédé comprend la création d'un film plastique avec deux faces opposées et leur assemblage direct et simultané avec respectivement la deuxième face de la couche dorsale et la première face de la couche frontale.

## Description

La présente invention a pour objet un revêtement de surface, notamment un revêtement mural, et son procédé de fabrication. Elle trouve en particulier son application dans le domaine des papiers peints et autres revêtements muraux de décoration d'intérieur.

Généralement, un revêtement de surface est constitué de plusieurs couches, dont au minimum une couche dorsale destinée à recouvrir la surface à revêtir, et une couche frontale constituant la couche visible une fois le revêtement posé sur la surface à revêtir.

En particulier, le domaine des revêtements dont la couche de base ou couche dorsale est en matériau de type non tissé connaît un succès croissant, en raison notamment de la grande stabilité dimensionnelle que ce matériau procure au revêtement, et de la facilité de pose par rapport à un revêtement sur un autre type de base.

Par matériau de type non tissé, on entend un matériau fibreux dont les fibres, ne sont pas tissées. Il s'agit donc d'un amalgame de fibres, naturelles ou non (par exemple un mélange cellulose et polyester), discontinues ou non, qui sont liées entre elles chimiquement, thermiquement ou mécaniquement. On parlera aussi de liaison des fibres entre elles par friction, adhésion, cohésion, ou encore compression.

Ce matériau possède également de bonnes propriétés anallergiques, antistatiques, biodégradables, de collage, et d'arrachage à sec. Il constitue donc bien un matériau de base intéressant pour les revêtements de surface, en particulier les revêtements muraux d'intérieur de type papier peint. Une couche frontale en matériau de type papier donne généralement de meilleurs résultats en terme esthétique et d'imprimabilité par rapport à un autre type de couche frontale, en particulier pour une revêtement mural.

Toutefois, l'utilisation et la fabrication d'un tel revêtement de surface sur base non tissée avec couche frontale en papier pose un certain nombre de problèmes.

En effet, une autre propriété d'un matériau non tissé est qu'il est très absorbant, ce qui peut occasionner la migration de l'eau et/ou de la colle nécessaire à la pose du revêtement, depuis la face dorsale de la base jusqu'à la face frontale du décor. Cette migration entraîne une instabilité dimensionnelle du produit, avec notamment des effets de « curling » et de rétraction.

Les revêtements de surface ainsi obtenus sont généralement sujets au cloquage. Ils présentent d'autre part une faible opacité, donc un pouvoir couvrant visuel insuffisant, en particulier lorsqu'il s'agit de recouvrir une surface tâchée ou déjà recouverte d'un autre revêtement.

Par ailleurs, avec de tels revêtements, les possibilités de décor sur la face frontale, tels que les décors tridimensionnels obtenus par exemple par gaufrage ou autre déformation mécanique, sont réduites. En effet, on est obligé de réaliser des gaufrages relativement grossiers pour garantir leur stabilité et leur permanence.

Du document FR 2 437 477, on connaît un procédé de fabrication d'un revêtement dont la base ou couche dorsale est une base en PVC, ou encore une base textile recouverte de PVC, et la couche frontale comprend généralement une première couche de PVC, une couche décor, et une couche finale de PVC à nouveau. Entre la couche dorsale et la couche frontale est inséré un film en polyéthylène, dont le rôle est de faire barrière aux produits organiques tels que les plastifiants qui ont tendance à migrer vers la couche frontale et finissent par la tâcher.

On pourrait tenter d'utiliser le procédé décrit dans ce document, dans le but de supprimer le problème précité de la migration de la couche dorsale vers la couche frontale.

Toutefois, le procédé de fabrication présenté dans ce document est compliqué et coûteux, notamment en raison du nombre de couches à assembler.

On pourrait également tenter de fabriquer un revêtement de surface en assemblant une base non tissée avec couche frontale en papier par collage des différentes couches avec des produits de collage. Un tel procéder serait toutefois là encore coûteux et peu satisfaisant, dans la mesure où le produit obtenu souffrirait toujours des inconvénients cités plus haut, parmi d'autres inconvénients, et notamment les inconvénients de faibles opacité et de migration de l'eau vers la couche frontale.

Le problème qui se pose alors est donc de disposer d'un revêtement de surface :
- dont la pose est facilitée par rapport à un autre revêtement (pose directe au mur)
- possédant une bonne stabilité dimensionnelle,
- dont la couche frontale de décor possède de bonnes qualités esthétiques et d'imprimabilité,
- non sujet à la migration de l'eau ou de la colle depuis la couche dorsale vers la couche frontale,
- possédant une bonne stabilité et finesse du décor tridimensionnel tel que le gaufrage,
- possédant une bonne opacité,
- possédant une bonne solidité à la pose,
- avec facilité d'arrachage à sec,
- simple à fabriquer, donc peu coûteux,

L'objet de l'invention est donc d'apporter une solution aux problèmes précités parmi d'autres problèmes.

L'invention se rapporte ainsi à un matériau en trois couches :
- une couche frontale constituée d'un papier qui peut lui-même être fabriqué selon un procédé multicouche,
- une couche centrale formée d'un film plastique, par exemple en polyéthylène ou autre polymère ou copolymère qui joue à la fois le rôle :
   o d'opacifiant,
   o de collage entre la couche frontale et la couche dorsale,
   o de barrière contre la remontée d'eau vers le papier frontal,
   o d'accroissement de la solidité de l'ensemble,
   o d'amélioration de la tenue des gaufrages et aspects de surface donnés par déformation mécanique,
- une couche dorsale formée par un non-tissé, stable dimensionnellement et solide à la déchirure.

Plus généralement, l'invention se rapporte donc, selon un premier aspect, à un revêtement de surface une couche dorsale en matériau de type non tissé et une couche frontale en matériau de type papier. La couche dorsale comprend elle-même une première face qui constitue la face dorsale du revêtement destinée à recouvrir la surface à revêtir, et une deuxième face opposée à sa première face. La couche frontale comprend elle-même une deuxième face constituant la face frontale décorative du revêtement, et une première face opposée à sa deuxième face.

De façon caractéristique, la deuxième face de la couche frontale est recouverte d'une couche imperméable aux liquides, et le revêtement de l'invention comprend en outre un film plastique dont la première face adhère directement à la deuxième face de la couche dorsale, et dont la deuxième face adhère directement à la première face de la couche frontale.

Ainsi, le revêtement de l'invention présente une bonne stabilité dimensionnelle grâce à l'utilisation d'un matériau non tissé pour la couche dorsale, de bonnes qualités esthétiques et d'imprimabilité grâce à l'utilisation d'un matériau de type papier pour la couche frontale.

Par ailleurs, le revêtement de l'invention est non sujet à la migration de l'eau ou de la colle depuis la couche dorsale vers la couche frontale, grâce à la présence du film plastique, et présente une bonne imperméabilité aux liquides, notamment à l'eau, grâce à la couche imperméable aux liquides recouvrant la couche frontale décorative.

L'ensemble est ainsi stable, permet une finesse du décor tridimensionnel par gaufrage par exemple, possède une bonne opacité, et présente une bonne solidité à la pose, tout en s'arrachant facilement à sec.

Dans une première variante de réalisation, la couche imperméable aux liquides est un vernis, par exemple de type PVC ou acryl.

Dans une deuxième variante de réalisation, éventuellement en combinaison avec la première, le film plastique est un film en matériau comprenant un polymère ou copolymère de type thermoplastique.

Il peut s'agir notamment d'un film en polyéthylène.

Dans encore une autre variante de réalisation, éventuellement en combinaison avec une ou plusieurs quelconques des précédentes, la couche frontale comprend deux ou plus sous-couches.

L'invention se rapporte également, selon un deuxième aspect, à un procédé de fabrication dans lequel le film est directement et de façon simultanée collé à chaud à la couche frontale et à la couche dorsale pour obtenir le produit.

Plus généralement, l'invention se rapporte, selon ce deuxième aspect, à un procédé de fabrication d'un revêtement de surface. Ce revêtement de surface comprend une face dorsale destinée à recouvrir la surface à revêtir, et une face frontale constituant la face décorative du revêtement. Le revêtement comprend également une couche dorsale et une couche frontale. La couche dorsale comprend elle-même une première face constituant la face dorsale du revêtement et une deuxième face opposée à sa première face. La couche frontale comprend elle-même une deuxième face constituant la face frontale du revêtement et une première face opposée à sa deuxième face.

De façon caractéristique, le procédé comprend une étape de création d'un film plastique, lui-même comprenant une première face et une deuxième face opposée à cette première face. Il comprend en outre une étape d'assemblage direct et simultané de la première face du film plastique avec la deuxième face de la couche dorsale, et de la deuxième face du film plastique avec la première face de la couche frontale.

Ainsi, le procédé de l'invention permet de fabriquer simplement et économiquement un revêtement de surface tel que présenté ci-dessus, en utilisant les propriétés du film plastique à insérer entre la couche dorsale et la couche frontale, sans utilisation de produits additionnels pour le collage, grâce notamment à l'assemblage direct et simultané du film plastique d'une part avec la couche dorsale et d'autre part avec la couche frontale.

De préférence, l'étape d'assemblage est réalisée directement en sortie de l'étape de création du film plastique.

De préférence encore, l'étape de création du film plastique est une étape d'extrusion.

L'étape d'assemblage peut par ailleurs comprendre une étape de collage à chaud direct et simultané de la première face du film plastique sur la deuxième face de la couche dorsale, et de la deuxième face du film plastique sur la première face de la couche frontale.

Dans une variante, le procédé comprend une étape d'application d'une couche imperméable aux liquides sur la deuxième face de la couche frontale.

De préférence, cette étape d'application de la couche imperméable aux liquides sur la deuxième face de la couche frontale et réalisée simultanément à l'impression d'un décor sur cette couche frontale.

D'autres caractéristiques et avantages de l'invention apparaîtront plus clairement et de manière complète à la lecture de la description ci-après des variantes préférées de réalisation du revêtement et de mise en oeuvre du procédé, lesquelles sont données à titre d'exemples non limitatifs et en référence aux dessins annexés suivants.
- figure 1 : représente schématiquement un exemple de revêtement de surface de l'invention,
- figure 2 : représente schématiquement un exemple de dispositif de fabrication du revêtement de surface de l'invention.

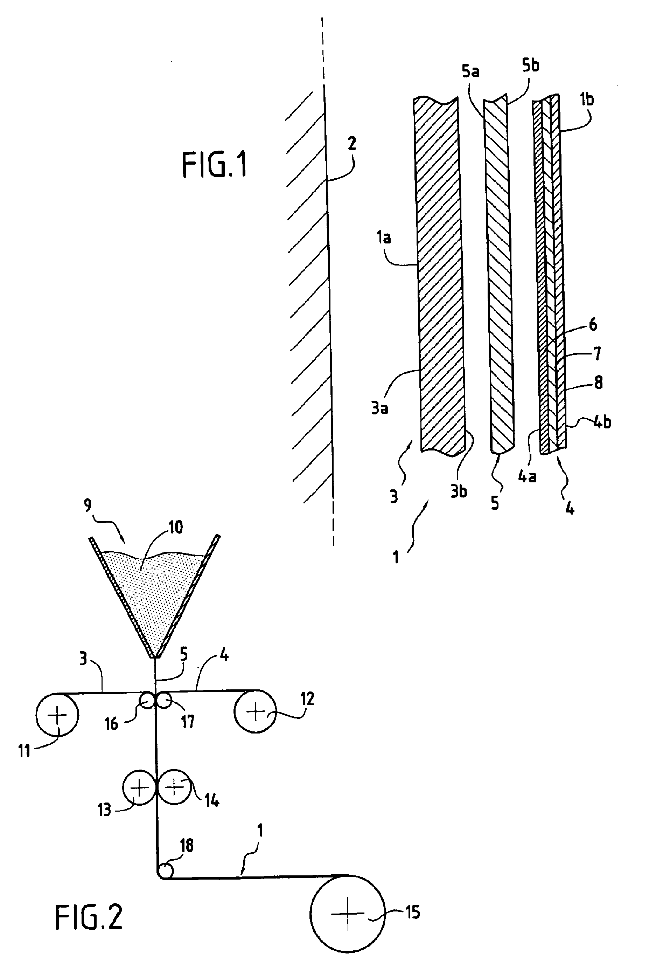

La figure 1 représente donc schématiquement un exemple de revêtement de surface de l'invention, vue en coupe dans le sens de l'épaisseur.

Le revêtement 1 présente une face dorsale 1 a et une face frontale 1b. La face dorsale 1 a est destinée à recouvrir la surface 2 à revêtir, par exemple la surface d'un mur. La face frontale 1b correspond à la face visible du revêtement 1 une fois celui-ci posé sur la surface 2.

Le revêtement 1 comprend trois couches référencées 3, 4 et 5, représentées distinctement les une des autres par souci de clarté, mais qui sont en réalité assemblées les unes aux autres.

La couche 3, en matériau de type non tissé, constitue la couche dorsale du revêtement 1. Elle possède une première face 3a, qui correspond à la face dorsale 1a du revêtement 1, et une deuxième face 3b opposée à sa première face 3a.

Ainsi, l'utilisation d'une couche dorsale 3 en matériau de type non tissé rend le revêtement 1 stable dimensionnellement, et facile à poser par rapport à un autre type de revêtement.

La couche 4, en matériau de type papier, constitue la couche frontale du revêtement 1. Elle possède une deuxième face 4b, qui correspond à la face frontale 1b du revêtement 1, et une première face 4a opposée à sa deuxième face 4b.

Ainsi, l'utilisation d'une couche frontale 4 en matériau de type papier procure au revêtement 1 de bonnes qualités esthétiques.

Eventuellement, la couche frontale 4 comprend plusieurs sous-couches 6, 7 en matériau de type papier. Lorsque cette couche frontale 4 comprend une sous-couche, on pariera de couche frontale simplex. Lorsque qu'elle comprend deux sous couches, on parlera de couche frontale duplex.

Entre la couche dorsale 3 et la couche frontale 4 est insérée une couche ou film plastique 5. Précisément, et même si les faces respectives des différentes couches sont représentées dissociées des faces voisines par souci de clarté, la première face 5a de ce film plastique 5 adhère directement à la deuxième face 3b de la couche dorsale 3, et la deuxième face 5b de ce film plastique 5 adhère directement à la première face 4a de la couche frontale 4.

Par ailleurs, la deuxième face 4b de la couche frontale 4 est recouverte d'une couche imperméable aux liquides, non représentée sur la figure.

Cette couche imperméable aux liquides, notamment à l'eau, est par exemple un vernis, de préférence de type PVC ou encore acryl.

Le matériau plastique utilisé pour le film plastique 5 est de préférence un polymère ou copolymère de type thermoplastique.

De très bons résultats peuvent notamment être obtenus avec un film en polyéthylène

Les matériaux thermoplastiques fondent lorsqu'on les chauffe à une certaine température, relativement basse (température de fusion de tels matériaux de l'ordre de 80°C à 300°C), ce qui facilite la fabrication de films ainsi que l'assemblage par thermocollage comme on le verra ci-dessous dans le procédé de fabrication de l'invention, en référence à la figure 2.

Ainsi, l'utilisation du film plastique 5 permet d'éviter la migration de l'eau ou de la colle depuis la couche dorsale 3 en matériau non tissé vers la couche frontale 5 en matériau papier, grâce aux propriétés de protection physico-chimiques intrinsèques au matériau utilisé pour ce film plastique 5. Un décor tridimensionnel, par exemple formé par gaufrage, sur le revêtement 1 restera donc stable et pourra être très ciselé, grâce aux propriétés mécaniques du film plastique 5.

L'utilisation du film plastique 5 et de ses propriétés optiques permet également d'obtenir un revêtement 1 possédant une bonne opacité.

La figure 2 représente schématiquement un exemple de dispositif de fabrication du revêtement de surface de l'invention, et permet d'illustrer le procédé de fabrication de l'invention.

Une couche 3 en matériau de type non tissé est fournie à partir d'un rouleau 11, et une couche 4 en matériau de type papier, éventuellement multicouche, est fournie à partir d'un rouleau 12.

Ces deux couches 3 et 4 peuvent être amenées en contact avec un film 5, par l'intermédiaire de deux cylindres de détours 16 et 17.

Le film 5 est produit au moyen d'une extrudeuse 9, par exemple à partir de poudre, granulés ou billes de polyéthylène 10.

Plus généralement, la fabrication d'un film plastique par extrusion consiste à faire passer la matière plastique 9, dans un cylindre chauffant, puis de la pousser par l'intermédiaire d'une vis sans fin qui l'entraîne dans une filière dont le profil permet de produire un film.

En sortie de l'extrudeuse 9, la couche 3 en matériau de type non tissé, la couche 4 en matériau de type papier, et le film plastique 5 sont assemblés directement et simultanément, en une seule étape.

L'assemblage est de préférence réalisé par collage à chaud, par exemple par passage entre deux cylindres 13 et 14 qui assurent la cohésion de l'ensemble couche 3 en non tissé, film plastique 5 et couche 4 en papier. Suite à l'opération d'extrusion, le film plastique 5 est suffisamment chaud pour garantir le succès de l'étape de collage à chaud de ce film entre la couche 3 et la couche 4. Eventuellement, les cylindres 13 et 14 peuvent être des cylindres chauffant pour garantir un bon collage à chaud.

Cet assemblage peut tout aussi bien être réalisé au moyen d'un unique cylindre de détour, éventuellement chauffant, sur lequel vient se plaquer l'ensemble couche 3, film 5 et couche 4.

En sortie de cette opération d'assemblage, on obtient un revêtement 1 comprenant une couche dorsale 3, un film plastique 5 et une couche frontale 4. Une des faces de la couche dorsale 3 adhère directement à une première face du film plastique 5. Une des faces de la couche frontale 4 adhère directement à la deuxième face du film plastique 5.

Après un éventuel passage par un cylindre de détour 18, le revêtement 1 ainsi obtenu est par exemple enroulé sur un rouleau 15, en vue de son conditionnement et de sa manutention ultérieure.

Au préalable, ou dans une opération ultérieure, on pourra faire subir au revêtement 1 un gaufrage en vue d'élaborer un effet de surface décoratif, par un procédé de gaufrage classique.

On pourra également procéder à l'impression de motifs décoratifs par un procédé d'impression classique, soit par impression du matériau ainsi complexé, soit par complexage d'une couche frontale déjà imprimée.

De préférence, on applique une couche imperméable aux liquides, telle que présentée plus haut en référence à la figure 1, sur la deuxième face 4b de la couche frontale, simultanément à l'impression du décor.

L'ensemble de la description ci-dessus est bien sûr donné à titre d'exemple et n'est pas limitatif de l'invention.

En particulier, le choix du polyéthylène comme matériau de base pour le film plastique 5 n'est pas limitatif de l'invention. Tout autre matériau plastique possédant des propriétés thermoplastiques, mécaniques, de protection physico-chimique, et optiques similaires pourra être utilisé.

Par ailleurs, la création de ce film plastique 5 au moyen d'une étape d'extrusion n'est pas non plus limitative de l'invention. Tout autre moyen de fabrication d'un film plastique pourra être envisagé.

## Revendications

1. Revêtement (1) de surface (2) comprenant :
- une couche dorsale (3) en matériau de type non tissé, comprenant une première face (3a) constituant la face dorsale (1a) dudit revêtement (1) destinée à recouvrir la surface (2) à revêtir, et une deuxième face (3b) opposée à sa dite première face (3a),
- une couche frontale (4) en matériau de type papier comprenant une deuxième face (4b) constituant la face frontale (1b) décorative dudit revêtement (1), et une première face (4a) opposée à sa dite deuxième face (4b),
**caractérisé en ce que** ladite deuxième face (4b) de ladite couche frontale (4) est recouverte d'une couche imperméable aux liquides, et **en ce que** ledit revêtement (1) comprend un film plastique (5) dont la première face (5a) adhère directement à ladite deuxième face (3b) de ladite couche dorsale (3) et dont la deuxième face (5b), opposée à sa dite première face (5a), adhère directement à ladite première face (4a) de ladite couche frontale (4),

2. Revêtement selon la revendication 1, **caractérisé en ce que** la couche imperméable aux liquides est un vernis, de préférence de type PVC ou acryl.

3. Revêtement (1) selon l'une quelconque des revendications 1 et 2,
**caractérisé en ce que** ledit film plastique (5) est un film en matériau comprenant un polymère ou copolymère de type thermoplastique.

4. Revêtement (1) selon la revendication 3, **caractérisé en ce que** ledit film plastique (5) est un film en polyéthylène.

5. Revêtement (1) selon l'une quelconque des revendications 1 à 4,
**caractérisé en ce que** ladite couche frontale (4) comprend une ou plusieurs de sous-couches (6, 7).

6. Procédé de fabrication d'un revêtement (1) de surface (2), ce dit revêtement (1) de surface (2) comprenant :
- une couche dorsale (3) comprenant une première face (3a) constituant la face dorsale (1a) dudit revêtement (1a) destinée à recouvrir la surface (2) à revêtir, et une deuxième face (3b) opposée à sa dite première face (3a),
- une couche frontale (4) comprenant une deuxième face (4b) constituant la face frontale (1b) décorative dudit revêtement (1), et une première face (4a) opposée à sa dite deuxième face (4b),
**caractérisé en ce qu'**il comprend :
- une étape de création d'un film plastique (5) comprenant une première face (5a) et une deuxième face (5b) opposée à cette dite première face (5a),
- une étape d'assemblage direct et simultané de ladite première face (5a) dudit film plastique (5) avec ladite deuxième face (3b) de ladite couche dorsale (3), et de ladite deuxième face (5b) dudit film plastique (5) avec ladite première face (4a) de ladite couche frontale (4).

7. Procédé selon la revendication 6, **caractérisé en ce que** ladite étape d'assemblage est réalisée directement en sortie de ladite étape de création dudit film plastique (5).

8. Procédé selon l'une quelconque des revendications 6 et 7,
**caractérisé en ce que** ladite étape de création dudit film plastique (5) est une étape d'extrusion.

9. Procédé selon l'une quelconque des revendications 6 à 8,
**caractérisé en ce que** ladite étape d'assemblage comprend une étape de collage à chaud direct et simultané de ladite première face (5a) dudit film plastique (5) sur ladite deuxième face (3b) de ladite couche dorsale (3), et de ladite deuxième face (5b) dudit film plastique (5) sur ladite première face (4a) de ladite couche frontale (4).

10. Procédé selon l'une quelconque des revendications 6 à 9,
**caractérisé en ce qu'**il comprend une étape d'application d'une couche imperméable aux liquides sur la deuxième face (4b) de ladite couche frontale (4), de préférence simultanément à l'impression d'un décor sur cette dite couche frontale (4).
